# EUROPEAN PATENT APPLICATION

(11) **EP 4 528 624 A1**
(43) Date of publication of application: **26.03.2025**
(21) Application number: 23807344.9
(22) Date of filing: 14.04.2023
(51) Int. Cl.: G06Q 40/04, G06Q 40/06

(54) **INFORMATION PROCESSING DEVICE, INFORMATION PROCESSING METHOD, AND PROGRAM**

(30) Priority: 20.05.2022 JP 2022083293
(71) Applicant: Kotaeru Holdings Inc., Tokyo 100-6390 (JP)
(72) Inventor: URUMA Yoshinari, Tokyo 100-6326 (JP)
(74) Representative: Murgitroyd & Company
(86) International application number: PCT/JP2023/015119
(87) International publication number: WO 2023/223731

(57) **Abstract**

The convenience of management of stock acquisition rights utilizing trust is improved. An information processing device provided with a control unit, wherein the control unit is configured to: accept information regarding stock acquisition rights set by an issuing company as a trust and information regarding the trust of the stock acquisition rights, regardless of whether the issuing company is listed or unlisted; accept information regarding employment and evaluation of officers, employees, external collaborators, and the like, the employment and evaluation being performed by the issuing company as needed; execute distribution processing of the stock acquisition rights at a beneficiary designation time set as the trust, regardless of whether the issuing company is listed or unlisted; and obtain a number allocated to each of a plurality of beneficiaries based on the information regarding employment and evaluation of officers, employees, external collaborators, and the like, wherein the trust is a trust subject to corporation taxation, the issuing company is a setter of the trust, each of the plurality of beneficiaries is one of officers and employees of the issuing company, or a subsidiary company or an associate company of the issuing company, external collaborators, and trustees of a different trust, and the trust is set by the trust of money or stock acquisition rights by the issuing company, and no payment to the issuing company is required upon issuance of the stock acquisition rights entrusted to the trustee.

## Description

### Technical Field

The present invention relates to an information processing device, an information processing method, and a program.

### Background Art

There is a stock option system as a stock compensation system. The stock option system is a compensation system with which a company grants "a right to acquire a stock of the company at a predetermined price (exercise price)" to a director or the like.

Patent Literature 1 discloses a support system for receiving compensation by purchasing stock options.

### Citation List

### Patent Literature

Patent Literature 1: JP 2002-183458 A

### Summary of Invention

### Technical Problem

In the conventional stock option system, it is necessary to determine a party to be granted at the time of issuance. In addition, since a stock option is normally required to have an exercise price to be a stock price equal to or higher than a stock price at the time of issuance, the exercise price varies depending on the timing of the issuance, and as a result, an amount of capital gain obtained when the stock option is exercised to acquire a stock, and the stock is sold also varies. This poses a problem that differences in values occur between officers and employees who are granted at an early stage after establishment of the company and officers and employees who are granted thereafter.

In order to solve this problem, trust-type stock options are increasingly introduced. The trust-type stock option is a system in which not an issuing company but an owner manager or a stockholder who indirectly gains a profit due to growth of the issuing company entrusts money, acquires stock acquisition rights, and delivers the stock acquisition rights to officers and employees according to the degree of contribution. This is because, in the case of contributing the fund of the issuing company, there is a possibility that future officers and employees will not bear the cost to be paid in order to acquire the initial stock acquisition rights but acquire the stock acquisition rights and eventually the stocks, and the stock acquisition rights will be evaluated as being favorable issuance, and in the case of contributing the fund of the issuing company, the fund of the issuing company will be substantially paid to the issuing company via the trust, and the person who exercises the rights of the stock acquisition rights will be burdened as false payment regulated by the Company Act.

However, in a case where the owner manager, stockholders, and the like contribute the fund, a large amount of fund is required depending on the total market value of the issuing company, and there is a case where introduction of a trust has to be postponed.

In addition, in a case where the owner manager, stockholders, and the like contribute the fund, a three-party contract with an issuing company who is the beneficiary designation right holder and a trustee is required, and thus, there is a case where it is difficult to perform an identification confirmation procedure or the like, and there is a problem that it is not possible to set a trust-type stock option in a case where a party who intends to voluntarily contribute the fund, such as the owner manager and the stockholders, as described above, is absent.

The present invention has been made to solve the above problems, and an object of the present invention is to improve convenience of management of stock acquisition rights utilizing trust.

### Solution to Problem

The present invention is an information processing device provided with: a control unit, wherein the control unit is configured to: accept information regarding stock acquisition rights set by an issuing company as a trust and information regarding the trust of the stock acquisition rights, regardless of whether the issuing company is listed or unlisted; accept information regarding employment and evaluation of officers, employees, external collaborators, and the like, the employment and evaluation being performed by the issuing company as needed; execute distribution processing of the stock acquisition rights at a beneficiary designation time set as the trust, regardless of whether the issuing company is listed or unlisted; and obtain a number allocated to each of a plurality of beneficiaries based on the information regarding employment and evaluation of officers, employees, external collaborators, and the like, wherein the trust is a trust subject to corporation taxation, the issuing company is a setter of the trust, each of the plurality of beneficiaries is one of officers and employees of the issuing company, or a subsidiary company or an associate company of the issuing company, external collaborators, and trustees of a different trust, and the trust is set by the trust of money or stock acquisition rights by the issuing company, and no payment to the issuing company is required upon issuance of the stock acquisition rights entrusted to the trustee.

### Advantageous Effects of Invention

According to the present invention, it is possible to improve convenience of management of stock acquisition rights utilizing trust.

### Brief Description of Drawings

Fig. 1 is a diagram illustrating an example of a system configuration of an information processing system.
Fig. 2 is a diagram illustrating an example of a hardware configuration of a server device.
Fig. 3 is a diagram for illustration of a trust option according to the present embodiment.
Fig. 4 is a sequence diagram illustrating an example of information processing in the information processing system.
Fig. 5 is a diagram illustrating an example of a configuration of information regarding a stock acquisition right and information regarding a trust that manages the stock acquisition right.

### Description of Embodiments

Hereinafter, an embodiment of the present invention will be described with reference to the drawings. Various features described in the following embodiment can be combined with each other.

In the present specification, a "unit" may include, for example, a combination of hardware resources implemented by a circuit in a broad sense and software information processing that can be specifically implemented by these hardware resources. In addition, various types of information are handled in the present embodiment, but these types of information are represented by the level of a signal value as a binary bit set having 0 or 1, and communication and operation can be executed on a circuit in a broad sense.

Furthermore, the circuit in a broad sense is a circuit realized by at least appropriately combining a circuit, a circuitry, a processor, a memory, and the like. That is, examples of the circuit in a broad sense include an application specific integrated circuit (ASIC), a programmable logic device (for example, a simple programmable logic device (SPLD), a complex programmable logic device (CPLD), and a field programmable gate array (FPGA)), and the like.

The present invention realizes a trust-type stock option in which the issuing company bears the trust money in which an issuing company does not contribute the fund for issuing a stock acquisition right to trustees of a trust, and a stock acquisition right is issued free by a resolution of a decision-making body of a stock company, and the trust stock option further, as the trustees of the trust are taxed on the market value at the time of allocation to the trust even if the stock acquisition right is issued free, calculates an economic condition of the stock acquisition right from information regarding a stock acquisition right and information regarding the stock price, calculates a tax amount to be paid by the trustees from the economic condition and the number of issues of the stock acquisition right, and contributes only money corresponding to the tax amount to the trust by the issuing company.

### First Embodiment

### 1. System Configuration

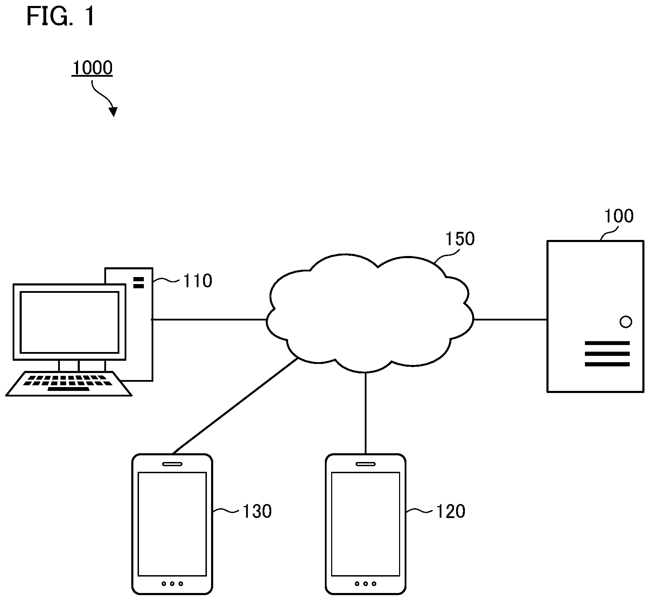

Fig. 1 is a diagram illustrating an example of a system configuration of an information processing system 1000. As illustrated in Fig. 1, the information processing system 1000 includes a server device 100, a client device 110, a client device 120, and a client device 130 as a system configuration. The server device 100 is a device of a trustee. The client device 110 is a device of an issuing company of stock acquisition rights. The client device 120 is a device of a beneficiary designation right holder of a stock acquisition right. The client device 130 is a device of an officer, an employee, an external collaborator, or the like of the issuing company who is a beneficiary.

Although only one client device 130 is illustrated in the information processing system 1000 in Fig. 1 for simplification of description, the client devices of a number as many as target persons to whom the stock acquisition rights are to be issued are included in the information processing system 1000. Examples of the device of the issuing company of stock acquisition rights include a personal computer (PC). Examples of the device of an officer or employee of the issuing company of stock acquisition rights include a smartphone. However, the smartphone is an example. The device of an officer or employee of the issuing company of stock acquisition rights may be a PC or a tablet computer. The server device 100 is an example of the information processing device.

### 2. Hardware Configuration of Server Device 100

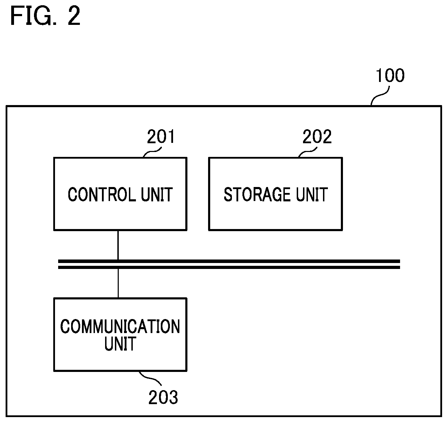

Fig. 2 is a diagram illustrating an example of a hardware configuration of the server device 100. The server device 100 includes a control unit 201, a storage unit 202, and a communication unit 203 as a hardware configuration. The control unit 201 is a central processing unit (CPU) or the like, and controls an entirety of the server device 100. The storage unit 202 is a hard disk drive (HDD), a read only memory (ROM), a random access memory (RAM), or the like, and stores a program, data used when the control unit 201 executes processing based on the program, and the like. The control unit 201 executes processing based on the program stored in the storage unit 202, thereby implementing a function and the like of the server device 100. The communication unit 203 is a network interface card (NIC) or the like, and connects the server device 100 to the network 150 to manage communication with other devices (for example, the client device 110 and the like).

### 3. Overview

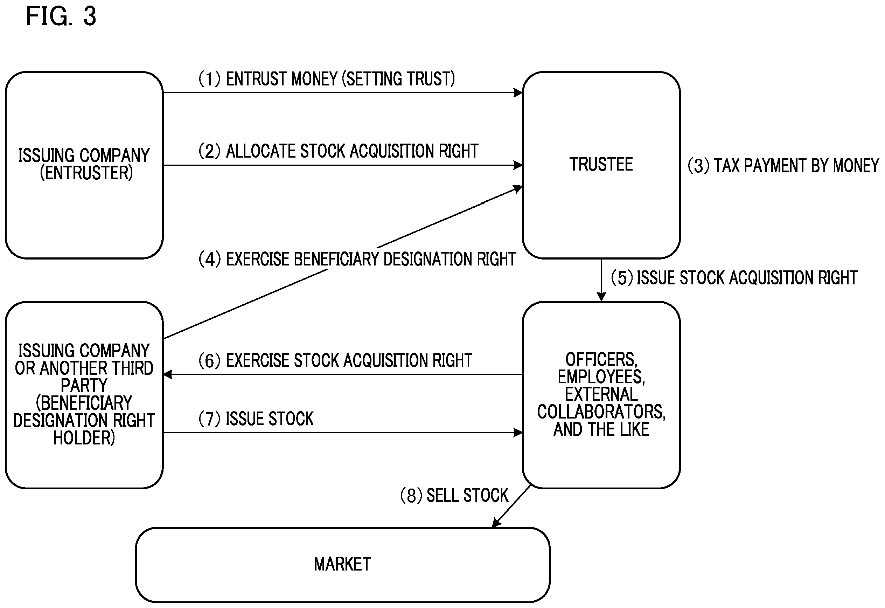

Fig. 3 is a diagram for illustration of a trust option according to the present embodiment. The server device 100 executes processing related to the trust option.

Here, the trust option refers to a mechanism for obtaining a capital gain by the following manner: (1) an issuing company entrusts money to a trustees of a trust, (2) the issuing company allocates stock acquisition rights to the trustees for free, (3) the trustees make tax payments using the entrusted money, (4) a beneficiary is designated by instruction of a beneficiary designation right holder to officers, employees, external collaborators, trustees of a different trust as beneficiaries at timing previously specified in a trust contract, and based on the above, (5) the stock acquisition rights are issued to the officers, employees, external cooperators, trustees of a different trust, (6) the officers, employees, and the like exercise rights of the issued stock acquisition rights, (7) stocks are issued from the issuing company, and (8) the stocks are sold to the market. Note that the capital gain may be obtained by selling, to a third party, the stock acquisition rights acquired by the officers, employees, external collaborators, trustees of a different trust in (5), or a trust beneficiary right having the stock acquisition rights as a trust property.

Regarding the trust option, what is important is issuance conditions of stock acquisition rights. This is because, while it is sufficient that a third party economically separated from the issuing company such as the owner manager or the stockholders trusts money and issues the money at the market value in the case of a normal trust-type stock option, the issuing company contributes money in the case of the trust option. Therefore, in a case where this corresponds to false payment, a holder of the stock acquisition right who has exercised the stock acquisition right is obliged to pay the paid-in price (Article 286-2 of the Companies Act), and the right as the stockholder cannot be exercised until the payment is completed. In addition, since there is a possibility that financial support provided by the introducing company for the stock acquisition by employees will be evaluated as substantially discounting the paid amount, there is a possibility that it will be evaluated as favorable issuance simply by calculating the paid-in price of the stock acquisition right at the market value (reference document "Report on New Company Stock Holding Scheme" November 17, 2008 Committee for New Company Stock Holding Scheme, page 22 (3) Relationship with favorable issuance regulations), and in this case, there is a risk that the employee or the like who becomes a beneficiary will be subject to salary income tax or the like at the time of exercising the right.

Therefore, in the trust option, as in the former mechanism, it is necessary to allow trust by the issuing company by a method of reducing the risk of receiving salary income tax at the time of exercise of rights even in the case of favorable issuance, by intentionally passing a resolution of a decision-making body (usually, a general meeting of stockholders) of the issuing company as a grant-free issuance permitted by the Companies Act so that it does not correspond to false payment, and by the trustee of the trust finishing payment of the value corresponding to a portion of the market value of the stock acquisition right at the time of issuance.

Therefore, in the present invention, in order to determine the amount of tax payment for the amount of a portion corresponding to the market value of the stock acquisition rights, first, it is necessary to calculate an economic value of the stock acquisition rights based on information regarding a stock acquisition right of the issuing company and information regarding the current stock price of the issuing company that are acquired from the issuing company or another third party. Then, in a case where the economic value of the stock acquisition rights can be calculated and an issuance quantity of the stock acquisition rights desired by the issuing company is determined, the amount of the trust money initially contributed by the issuing company is calculated in consideration of the tax rate and the like. The trust option is executed under such a process.

Then, once the trustees accept the stock acquisition rights based on the trust option, information regarding designation of the beneficiary is input by the beneficiary designation right holder based on the number of the stock acquisition rights set in this manner is accepted, and a party and a number by which the stock acquisition rights are issued are calculated.

In this way, it is possible to provide the stock acquisition rights under the same condition according to the degree of contribution afterwards to the officials and employees who have joined the company after setting up the trust, external collaborators, and the like, while solving the problem of false payment and favorable issuance that are problems when the issuing company contributes money.

Note that the present invention can also be utilized for properties other than stock acquisition rights, for example, call options. The stock acquisition right is a right to acquire stocks from the issuing company when the right is exercised, and the call option is a right to acquire a stock from a stockholder who is a debtor of the call option when the right is exercised. Since a capital gain can be obtained when the call option is exercised after the stock price rises, the stock is acquired at the exercise price set at the time of setting the call option, and is sold at the rising stock price, a similar effect is provided as an incentive for the officers, employees, and external collaborators. In this case, similarly to the stock acquisition right, the initial call option will be accepted by the trustee from the stockholders for free, and the amount equivalent to the market value (fair value) will be paid.

### 4. Information processing

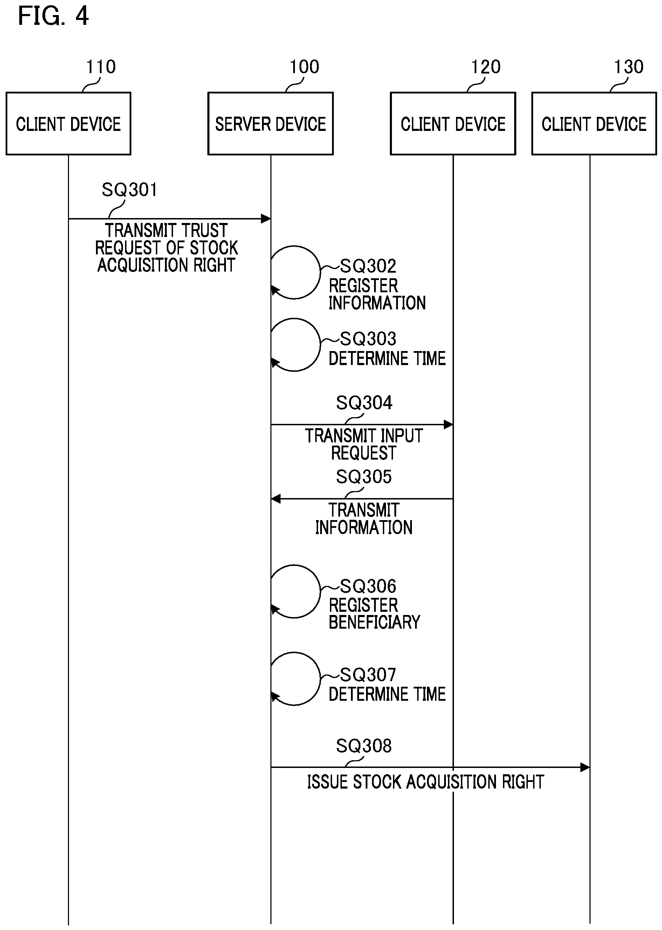

Fig. 4 is a sequence diagram illustrating an example of information processing in the information processing system 1000.

In SQ301, the client device 110 of the issuing company transmits, to the server device 100, a trust request related to introduction of a trust type stock acquisition right of the issuing company. The timing of transmitting the trust request is, for example, before (1) in Fig. 3. The control unit 201 of the server device 100 receives the trust request of the issuing company. Here, the trust requested in the trust request is a trust subject to corporation taxation. In addition, the trust request includes information regarding a stock acquisition right and information regarding a trust that manages the stock acquisition right. Here, an example of receiving the trust request has been described as an example of accepting the trust request, but in a case where an input unit or the like is provided for the server device 100, the control unit 201 may accept an input of the trust request for the stock acquisition right of the issuing company via the input unit.

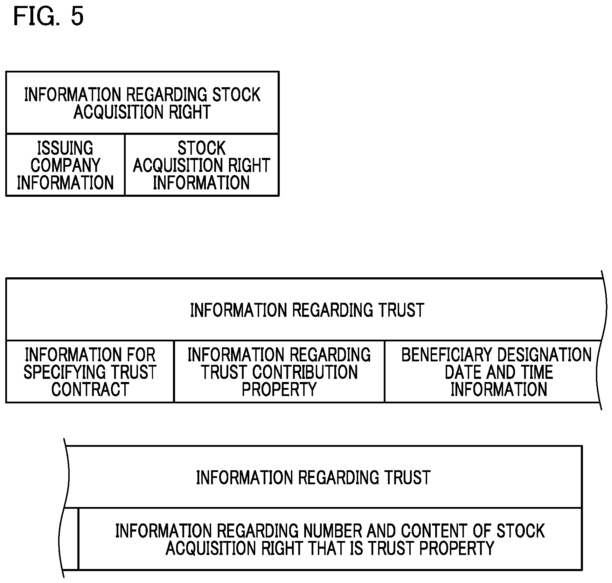

Fig. 5 is a diagram illustrating an example of a configuration of information regarding a stock acquisition right and information regarding a trust that manages the stock acquisition right. The information regarding the stock acquisition right includes issuing company information and stock acquisition right information. The information regarding the trust includes information specifying a trust contract, information regarding a trust contribution property, beneficiary designation date and time information, and information regarding a number and a content of the stock acquisition right that is the trust property. The issuing company information is information related to an issuing company (entruster), and includes a name, a zip code, an address, a corporation number, contact information (E-mail address, telephone number, etc.), and the like of the issuing company. The stock acquisition right information includes a serial number of the stock acquisition right of the issuing company, a paid-in price, a market value of the stock acquisition right, an exercise period, an exercise condition, an exercise price, an issued number, a number of surviving units, and the like. The information for specifying the trust contract includes a contract execution date, a contract type code, a customer ID, and the like.

Here, the paid-in price is zero. In addition, the information regarding the trust contribution property includes a type of contribution property (such as money, stock acquisition rights, or other property), an amount of money when the money is contributed, and a market value (fair value) when the stock acquisition rights are contributed. Note that the amount of the trust contribution property is determined in conjunction with the market value (fair value), instead of the paid-in price of the stock acquisition rights. The beneficiary designation date and time information includes beneficiary designation date and time set forth in the trust contract.

It should be noted that the present invention is characterized in that, although the stock acquisition right has a market value (fair value) because they have an economic advantage of being able to gain a capital gain in the future, the paid-in price is zero, and as a result, an amount equivalent to the paid-in price for the stock acquisition right is not required as a trust contribution property, but includes an amount required for payment of taxes imposed on the market value (fair value) of the stock acquisition right.

For example, based on a request from the client device 110, the control unit 201 controls the display unit or the like of the client device 110 to display an input screen for inputting the information regarding the stock acquisition right, the information regarding a trust that manages the stock acquisition right, and the like. Then, when information is input on the input screen and a transmission button or the like is selected, the client device 110 of the issuing company transmits a trust request regarding introduction of the trust type stock acquisition right of the issuing company to the server device 100.

In SQ302, the control unit 201 stores, in the storage unit 202, the information regarding the stock acquisition right and the information regarding the trust included in the trust request. For example, the value of each item as illustrated in Fig. 5 is stored in the storage unit 202.

In SQ303, the control unit 201 determines whether or not the timing of a certain period of time before the beneficiary designation date and time arrives based on the beneficiary designation date and time information of the stock acquisition right of the information regarding the trust stored in the storage unit 202 and the information of the real-time clock included in the control unit 201. In a case where it is determined that the timing of a certain period before the beneficiary designation date and time arrives, the control unit 201 executes processing of SQ304. In a case where it is determined that the timing a certain period before the beneficiary designation date and time has not arrived, the control unit 201 repeats the processing of SQ303. The processing of SQ303 is an example of the processing of determining whether or not the timing of a certain period before the beneficiary designation date and time has arrived.

In SQ304, the control unit 201 transmits a request for inputting information regarding employment and evaluation to the client device 120 of the beneficiary designation right holder. Here, the information regarding employment and evaluation includes information regarding a plurality of beneficiaries and point information regarding each of the plurality of beneficiaries. The information regarding the beneficiaries includes a number of beneficiaries, a position of each beneficiary, the name of each beneficiary, and the like. Here, the beneficiaries include a person who has joined the issuing company after the issuance of the stock acquisition rights (or after the stock acquisition rights are entrusted). In addition, the point information is a point granted according to the period in the issuing company. and the like of the beneficiary. The information regarding employment and evaluation may include distribution rules created by the issuing company or a third party. The beneficiary designation right holder is the issuing company in many cases, but may be a third party other than the issuing company.

In SQ305, the control unit 201 receives transmission of the information regarding employment and evaluation from the client device 120 of the beneficiary designation right holder. Examples of the information regarding employment and evaluation include an incentive at the time of employment and a contribution degree. As an incentive at the time of employment, it is possible to determine that a predetermined number of stock acquisition rights is issued in accordance with a position of an employee or the like at the time of employment. Examples of the degree of contribution include personnel evaluation of an employee or the like during an evaluation period, a certain behavior indicating a degree of contribution expectation of an employee or the like, a working period, an award given to an employee or the like during an evaluation period, a salary of an employee or the like, an event in a issuing company, a life event of an employee or the like, a degree of achievement of a business plan, a degree of achievement of a project, and the like.

In SQ306, the control unit 201 obtains the number of stock acquisition rights to be allocated to each of the plurality of beneficiaries based on the number of stock acquisition rights to be designated as a beneficiary at the beneficiary designation time derived from the information regarding the stock acquisition right and the information regarding the trust, and the information regarding employment and evaluation. More specifically, the control unit 201 obtains the number of stock acquisition rights to be acquired to be allocated to each of a plurality of beneficiaries based on the information regarding the beneficiaries and the point information included in the information regarding employment and evaluation. For example, in a case where there are three beneficiaries, Mr. A, Mr. B, and Mr. C, the points of Mr. A are 5000 points, the points of Mr. B are 3000 points, and the points of Mr. C are 2000 points, and there are 20,000 stock acquisition rights to be issued at the beneficiary designation time of this time in SQ306, the control unit 201 calculates the number of shares to be allocated to each of the plurality of beneficiaries, that is, 10,000 for Mr. A, 6000 for Mr. B, and 4000 for Mr. C.

In SQ307, the client device 110 determines whether or not the beneficiary designation date and time has arrived based on the information regarding the beneficiary designation date and time in the information regarding the trust and the information regarding the real-time clock included in the control unit 201. When it is determined that the beneficiary designation date and time has arrived, the control unit 201 executes processing of SQ308. When it is determined that the beneficiary designation date and time has not arrived, the control unit 201 repeats the processing of SQ307.

The processing of SQ306 and SQ307 is an example of the processing of determining the number of stock acquisition right to be allocated of the plurality of beneficiaries based on the information regarding the stock acquisition right, the information regarding the trust, and the information regarding employment and evaluation.

In addition, in SQ304 and SQ305, when it is determined that it is a certain period (for example, one week) before the beneficiary designation date and time, the control unit 201 transmits a transmission request of the information regarding employment and evaluation. However, in a case where the control unit 201 determines that it is a certain period of time (for example, one week) before the beneficiary designation date and time and does not receive the information regarding adoption and evaluation (information including the finally determined beneficiary) from the issuing company, the control unit may transmit a transmission request of the information regarding employment and evaluation to the client device 110.

In SQ308, the control unit 201 executes a processing related to the issuance of the stock acquisition right to each of the plurality of beneficiaries based on the obtained allocation number. Examples of the processing related to the delivery of the stock acquisition right include processing of transmitting information including the number of the allocated stock acquisition right to the beneficiary. Note that, while the trust property is usually handed over to the beneficiary at the book value immediately before the designation of the beneficiary in the trust subject to corporation taxation, the present invention is characterized in that, although the paid-in price for the stock acquisition rights is zero, the stock acquisition rights are handed over at the market value (fair value) at the time of issuance of the stock acquisition rights when they are handed over as the acquired book value.

According to the present embodiment, since stock options under the same conditions can be uniformly pooled in a trust, it is possible to eliminate a sense of unfairness regarding the issuance of stock options. In addition, according to the present embodiment, it is possible to extend the tax on the beneficial rights acquired by the officers and employees (beneficiary) until the time of final stock sale. Furthermore, according to the present embodiment, when performing trust setting, it is not necessary to pay the issuance price (paid-in price) for acquiring the stock acquisition rights, and for the beneficiaries, it is also possible to distribute according to a distribution rule designated by the beneficiary designation right holder at any time instead of a predetermined standard.

Advantages of the trust option will now be described. In conclusion, the trust option of the present embodiment is easy to introduce for the issuing company as much as it can be introduced without incurring the paid-in price, and is easy to introduce as much as it does not have to bear the exercise price. In a case where it is necessary for the entruster to entrust the exercise price, not only the burden of the exercise price but also the burden of about a corporation tax of 38% is required, and thus the burden amount is very heavy. In addition, it is an advantage of the present embodiment that the beneficiary can be designated. In a case where the issuing company makes a fund contribution to be converted into stocks, designation of a beneficiary is not possible because the restriction on acquisition of parent company stocks by the subsidiary company is not removed.

Here, a comparison will be described among a trust-type stock option in which a third party such as a so-called owner manager makes a trust contribution, an existing option pool trust in which the issuing company makes a contribution, and a trust option in the present embodiment.

In the trust-type stock option in which a third party such as a so-called owner manager makes a trust contribution, a third party such as the owner manager has to bear a portion of the issuance price (paid-in price), and there is a disadvantage that the issuing company cannot introduce the stock option without such a cooperative third party.

The existing option pool trusts to be contributed by the issuing company can be borne by the issuing company, but when summed with the exercise price, the entire tax burden imposed by the tax-inclusive trust on the stock value itself and the trust subject to corporation taxation at the time of issuance of the issuing company (not the value of the stock acquisition rights, which are often 1, 2% of the stock value) must be borne as a trust contribution.

On the other hand, according to the present embodiment, there is an advantage that the issuing company can perform introduction without even paying the paid-in price of the stock acquisition right. As described above, the present embodiment provides convenience that the conventional trust-type stock options and option pool trusts do not have from the viewpoint of ease of introduction, weight of a burden amount, and availability of designation of a beneficiary even in a case where stock acquisition rights of the same content are entrusted.

By using the mechanism of the present invention, the issuing company can obtain an effect equivalent to that of the trust-type stock option by using its own fund and reducing transaction costs. That is, while with the trust stock option, it is possible to enjoy the capital gain with respect to the difference between the stock price at the time point when the trust is set in advance and the stock price at the time point when the designation of the beneficiary is performed and the stock is sold after the exerciser, such a merit can be realized at a lower cost according to the present invention. In addition, the stock acquisition rights under the same conditions can be issued to all officers including not only current officers but also officers who will join or take office in the future. There is no sense of unfairness (regarding the issuance price) caused by the time of joining the company, which was generated in the existing stock option system. It can also contribute to the invitation of officers and employees as an attractive incentive plan. In addition, by introducing while the company scale is relatively small, it is possible to introduce an effective incentive plan while reducing the cost burden.

In addition, by using the mechanism of the present invention, it is possible for the beneficiary to acquire the stock acquisition right of the issuing company for free, and it is possible to acquire the stock of the issuing company for "the market value (fair value) of the stock acquisition right allocated to the trust at the current time and the exercise price of the stock acquisition right" as the acquisition cost (book value) only by paying the exercise price of the stock acquisition rights allocated to the trust. In addition, it is possible to set that no tax is imposed at the time of issuance of the stock, and transfer profit tax is imposed at the time of selling the acquired stock.

### <Supplementary Note 1>

The present invention may be provided in the following aspects.

In the information processing device described above, the control unit executes processing related to issuance of the stock acquisition rights to each of the plurality of beneficiaries based on the obtained allocated number.

In the information processing device described above, an issuance price for a stock acquisition right is fixed.

In the information processing device described above, the information regarding employment and evaluation includes information regarding the plurality of beneficiaries, and the plurality of beneficiaries include a person who has joined the issuing company after the issuance of the stock acquisition rights.

In the information processing device described above, the information regarding employment and evaluation includes information regarding the plurality of beneficiaries and point information regarding each of the plurality of beneficiaries, and the control unit obtains the number of the allocated stock acquisition rights delivered to each of the plurality of beneficiaries based on the information regarding the beneficiaries and the point information.

In the information processing device described above, the control unit is configured to: accept confirmation of the information regarding employment and evaluation based on the information regarding the stock acquisition rights and the information regarding a trust that manages the stock acquisition right; and obtain the number of allocation of the stock acquisition rights acquired by exercising processing of the of the stock acquisition rights to each of the plurality of beneficiaries based on the accepted and confirmed information regarding employment and evaluation.

In the information processing device described above, the control unit determines whether the beneficiary designation date and time has arrived based on the information regarding the stock acquisition right and the information regarding the trust that manages the stock acquisition right, and executes distribution processing of the stock acquisition right in a case where it is determined that the beneficiary designation date and time has arrived.

An information processing method executed by an information processing device, the information processing method including: accepting information regarding a stock acquisition right of the issuing company and information regarding a trust that manages the stock acquisition right, the trust being a trust subject to corporation taxation; executing a transmission request of information regarding employment and evaluation prior to the beneficiary designation date and time based on the information regarding the stock acquisition right and the information regarding the trust that manages the stock acquisition right; and obtaining a number of allocation of the stock acquisition right to be acquired by distribution processing of the stock acquisition right to each of a plurality of beneficiaries based on the information regarding employment and evaluation that has been received.

A program for causing a computer to function as the control unit of the information processing device.

It should be appreciated that the present invention is not limited to the above aspects.

For example, the program may be provided as a computer-readable non-transitory storage medium that stores the above-described program.

In addition, the above-described embodiment and modifications may be arbitrarily combined and implemented.

For example, in a case where the beneficiaries cannot be designated for all the stock acquisition rights at the beneficiary designation date and time, the stock acquisition rights may be handed over to the trustee of another trust, and the stock acquisition rights may be issued to the beneficiary designated at the beneficiary designation date and time in the other trust. Alternatively, for example, in a case where it is desired to transfer the stock acquisition right after working for several years, a trust may be created to issue the right to the beneficiary when a condition for suspension is satisfied or not satisfied or an assigned time arrives, and then the stock acquisition right is transferred to to trustee of the trust and issued to the beneficiary when the condition for suspension is satisfied or not satisfied or an assigned time arrives.

### <Supplementary Note 2>

The present invention may also be as described below.
1. An information processing device provided with:
   a control unit, wherein
   the control unit is configured to:
   accept information regarding stock acquisition rights set by an issuing company as a trust and information regarding the trust of the stock acquisition rights, regardless of whether the issuing company is listed or unlisted;
   accept information regarding employment and evaluation of officers, employees, external collaborators, and the like, the employment and evaluation being performed by the issuing company as needed;
   execute distribution processing of the stock acquisition rights at a beneficiary designation time set as the trust, regardless of whether the issuing company is listed or unlisted; and
   obtain a number allocated to each of a plurality of beneficiaries based on the information regarding employment and evaluation of officers, employees, external collaborators, and the like, wherein
   the trust is a trust subject to corporation taxation,
   the issuing company is a setter of the trust,
   each of the plurality of beneficiaries is one of officers and employees of the issuing company, or a subsidiary company or an associate company of the issuing company, external collaborators, and trustees of a different trust, and
   the trust is set by the trust of money or stock acquisition rights by the issuing company, and
   no payment to the issuing company is required upon issuance of the stock acquisition rights entrusted to the trustee.
2. An information processing device provided with:
   a control unit, wherein
   the control unit is configured to:
      accept information regarding stock acquisition rights set by an issuing company as a trust, information regarding the trust of the stock acquisition rights, and information regarding a number of stock acquisition rights to be allocated in the trust, regardless of whether the issuing company is listed or unlisted;
      accept information regarding employment and evaluation of officers, employees, external collaborators, and the like, the employment and evaluation being performed by the issuing company as needed;
      execute distribution processing of the stock acquisition rights at a beneficiary designation time set as the trust, regardless of whether the issuing company is listed or unlisted; and
      obtain a number allocated to each of a plurality of beneficiaries based on the information regarding employment and evaluation of officers, employees, external collaborators, and the like, wherein
      the trust is a trust subject to corporation taxation, the issuing company is a setter of the trust,
      each of the plurality of beneficiaries is one of officers and employees of the issuing company, or a subsidiary company or an associate company of the issuing company, external collaborators, and trustees of a different trust, and
      the trust is set by the trust of money or stock acquisition rights by the issuing company, and
      no payment to the issuing company is required upon issuance of the stock acquisition rights entrusted to the trustee.
3. The information processing device according to the item 1 or 2, wherein
   in a case where beneficiaries are not determined for all of the stock acquisition rights, information regarding a number of unallocated stock acquisition rights is accepted.
4. The information processing device according to any one of the items 1 to 3, wherein
   the control unit executes processing related to issuance of the stock acquisition rights to each of the plurality of beneficiaries based on the obtained allocated number.
5. The information processing device according to any one of the items 1 to 4, wherein
   an issuance price as a paid-in price for a stock acquisition right is zero.
6. The information processing device according to any one of the items 1 to 5, wherein
   the information regarding employment and evaluation includes information regarding the plurality of beneficiaries, and
   the plurality of beneficiaries include a person who has joined the issuing company, or the subsidiary company or the associate company of the issuing company after the issuance of the stock acquisition rights.
7. The information processing device according to any one of the items 1 to 6, wherein
   the information regarding employment and evaluation includes information regarding the plurality of beneficiaries and point information regarding each of the plurality of beneficiaries, and
   the control unit obtains the number of the allocated stock acquisition rights to be delivered to each of the plurality of beneficiaries based on the information regarding the beneficiaries and the point information.
8. The information processing device according to any one of the items 1 to 7, wherein
   the control unit is configured to:
   accept confirmation of the information regarding employment and evaluation based on the information regarding the stock acquisition rights and the information regarding the trust; and
   obtain the number of the stock acquisition rights allocated to each of the plurality of beneficiaries based on the accepted and confirmed information regarding employment and evaluation.
9. An information processing method executed by an information processing device, the method including:
   accepting information regarding stock acquisition rights set by an issuing company as a trust and information regarding the trust of the stock acquisition rights, regardless of whether the issuing company is listed or unlisted;
   accepting information regarding employment and evaluation of officers, employees, external collaborators, and the like, the employment and evaluation being performed by the issuing company as needed;
   executing distribution processing of the stock acquisition rights at a beneficiary designation time set as the trust, regardless of whether the issuing company is listed or unlisted; and
   obtaining a number allocated to each of a plurality of beneficiaries based on the information regarding employment and evaluation of officers, employees, external collaborators, and the like, wherein
   the trust is a trust subject to corporation taxation,
   the issuing company is a setter of the trust,
   each of the plurality of beneficiaries is one of officers and employees of the issuing company, or a subsidiary company or an associate company of the issuing company, external collaborators, and trustees of a different trust, and
   the trust is set by the trust of money or stock acquisition rights by the issuing company, and
   no payment to the issuing company is required upon issuance of the stock acquisition rights entrusted to the trustee.
10. An information processing method executed by an information processing device, the method including:
   accepting information regarding stock acquisition rights set by an issuing company as a trust, information regarding the trust of the stock acquisition rights, and information regarding a number of stock acquisition rights to be allocated in the trust, regardless of whether the issuing company is listed or unlisted;
   accepting information regarding employment and evaluation of officers, employees, external collaborators, and the like, the employment and evaluation being performed by the issuing company as needed;
   executing distribution processing of the stock acquisition rights at a beneficiary designation time set as the trust, regardless of whether the issuing company is listed or unlisted; and
   obtaining a number allocated to each of a plurality of beneficiaries based on the information regarding employment and evaluation of officers, employees, external collaborators, and the like, wherein
   the trust is a trust subject to corporation taxation,
   the issuing company is a setter of the trust,
   each of the plurality of beneficiaries is one of officers and employees of the issuing company, or a subsidiary company or an associate company of the issuing company, external collaborators, and trustees of a different trust, and
   the trust is set by the trust of money or stock acquisition rights by the issuing company, and
   no payment to the issuing company is required upon issuance of the stock acquisition rights entrusted to the trustee.
11. A program for causing a computer to function as the control unit of the information processing device according to any one of the items 1 to 8.

Although the various embodiments according to the present invention have been described above, these embodiments are presented as examples, and are not intended to limit the scope of the invention. Novel embodiments can be implemented in various other forms, and omissions, substitutions, and changes can be made in various manners without departing from the gist of the invention. The embodiments and modifications of the embodiments are included in the scope and the gist of the invention, and are included in the invention described in the claims and the equivalent scope of the claims.

This application claims priority based on Japanese Patent Application No. 2022-83293 filed on May 20, 2022, the entire contents of which are incorporated herein by reference.

### Reference Signs List

- 100: Server device
- 110: Client device
- 120: Client device
- 130: Client device
- 150: Network
- 201: Control unit
- 202: Storage unit
- 203: Communication unit
- 1000: Information processing system

## Claims

1. An information processing device comprising:
a control unit, wherein
the control unit is configured to:
accept information regarding stock acquisition rights set by an issuing company as a trust and information regarding the trust of the stock acquisition rights, regardless of whether the issuing company is listed or unlisted;
accept information regarding employment and evaluation of officers, employees, external collaborators, and the like, the employment and evaluation being performed by the issuing company as needed;
execute distribution processing of the stock acquisition rights at a beneficiary designation time set as the trust, regardless of whether the issuing company is listed or unlisted; and
obtain a number allocated to each of a plurality of beneficiaries based on the information regarding employment and evaluation of officers, employees, external collaborators, and the like, wherein
the trust is a trust subject to corporation taxation,
the issuing company is a setter of the trust,
each of the plurality of beneficiaries is one of officers and employees of the issuing company, or a subsidiary company or an associate company of the issuing company, external collaborators, and trustees of a different trust, and
the trust is set by the trust of money or stock acquisition rights by the issuing company, and
no payment to the issuing company is required upon issuance of the stock acquisition rights entrusted to the trustee.

2. An information processing device comprising:
a control unit, wherein
the control unit is configured to:
accept information regarding stock acquisition rights set by an issuing company as a trust, information regarding the trust of the stock acquisition rights, and information regarding a number of stock acquisition rights to be allocated in the trust, regardless of whether the issuing company is listed or unlisted;
accept information regarding employment and evaluation of officers, employees, external collaborators, and the like, the employment and evaluation being performed by the issuing company as needed;
execute distribution processing of the stock acquisition rights at a beneficiary designation time set as the trust, regardless of whether the issuing company is listed or unlisted; and
obtain a number allocated to each of a plurality of beneficiaries based on the information regarding employment and evaluation of officers, employees, external collaborators, and the like, wherein
the trust is a trust subject to corporation taxation,
the issuing company is a setter of the trust,
each of the plurality of beneficiaries is one of officers and employees of the issuing company, or a subsidiary company or an associate company of the issuing company, external collaborators, and trustees of a different trust, and
the trust is set by the trust of money or stock acquisition rights by the issuing company, and
no payment to the issuing company is required upon issuance of the stock acquisition rights entrusted to the trustee.

3. The information processing device according to claim 1, wherein
in a case where beneficiaries are not determined for all of the stock acquisition rights, information regarding a number of unallocated stock acquisition rights is accepted.

4. The information processing device according to claim 1, wherein
the control unit executes processing related to issuance of the stock acquisition rights to each of the plurality of beneficiaries based on the obtained allocated number.

5. The information processing device according to claim **1,** wherein
an issuance price as a paid-in price for a stock acquisition right is zero.

6. The information processing device according to claim **1,** wherein
the information regarding employment and evaluation includes information regarding the plurality of beneficiaries, and
the plurality of beneficiaries include a person who has joined the issuing company, or the subsidiary company or the associate company of the issuing company after the issuance of the stock acquisition rights.

7. The information processing device according to claim **1,** wherein
the information regarding employment and evaluation includes information regarding the plurality of beneficiaries and point information regarding each of the plurality of beneficiaries, and
the control unit obtains the number of the allocated stock acquisition rights to be delivered to each of the plurality of beneficiaries based on the information regarding the beneficiaries and the point information.

8. The information processing device according to claim 1, wherein the control unit is configured to:
accept confirmation of the information regarding employment and evaluation based on the information regarding the stock acquisition rights and the information regarding the trust; and
obtain the number of the stock acquisition rights allocated to each of the plurality of beneficiaries based on the accepted and confirmed information regarding employment and evaluation.

9. An information processing method executed by an information processing device, the method comprising:
accepting information regarding stock acquisition rights set by an issuing company as a trust and information regarding the trust of the stock acquisition rights, regardless of whether the issuing company is listed or unlisted;
accepting information regarding employment and evaluation of officers, employees, external collaborators, and the like, the employment and evaluation being performed by the issuing company as needed;
executing distribution processing of the stock acquisition rights at a beneficiary designation time set as the trust, regardless of whether the issuing company is listed or unlisted; and
obtaining a number allocated to each of a plurality of beneficiaries based on the information regarding employment and evaluation of officers, employees, external collaborators, and the like, wherein
the trust is a trust subject to corporation taxation,
the issuing company is a setter of the trust,
each of the plurality of beneficiaries is one of officers and employees of the issuing company, or a subsidiary company or an associate company of the issuing company, external collaborators, and trustees of a different trust, and
the trust is set by the trust of money or stock acquisition rights by the issuing company, and
no payment to the issuing company is required upon issuance of the stock acquisition rights entrusted to the trustee.

10. An information processing method executed by an information processing device, the method comprising:
accepting information regarding stock acquisition rights set by an issuing company as a trust, information regarding the trust of the stock acquisition rights, and information regarding a number of stock acquisition rights to be allocated in the trust, regardless of whether the issuing company is listed or unlisted;
accepting information regarding employment and evaluation of officers, employees, external collaborators, and the like, the employment and evaluation being performed by the issuing company as needed;
executing distribution processing of the stock acquisition rights at a beneficiary designation time set as the trust, regardless of whether the issuing company is listed or unlisted; and
obtaining a number allocated to each of a plurality of beneficiaries based on the information regarding employment and evaluation of officers, employees, external collaborators, and the like, wherein
the trust is a trust subject to corporation taxation,
the issuing company is a setter of the trust,
each of the plurality of beneficiaries is one of officers and employees of the issuing company, or a subsidiary company or an associate company of the issuing company, external collaborators, and trustees of a different trust, and
the trust is set by the trust of money or stock acquisition rights by the issuing company, and
no payment to the issuing company is required upon issuance of the stock acquisition rights entrusted to the trustee.

11. A program for causing a computer to function as the control unit of the information processing device according to claim 1.
